# EUROPÄISCHE PATENTSCHRIFT

(11) **EP 4 051 166 B1**
(45) Veröffentlichungstag und Bekanntmachung des Hinweises auf die Patenterteilung: **07.01.2026**
(21) Anmeldenummer: 20790034.1
(22) Anmeldetag: 20.10.2020
(51) Int. Cl.: A61C 13/093, A61C 13/10

(54) **KÜNSTLICHES ZAHNELEMENT**
ARTIFICIAL TOOTH ELEMENT
ÉLÉMENT DE DENT ARTIFICIEL

(30) Priorität: 29.10.2019 EP 19205897
(43) Veröffentlichungstag der Anmeldung: 07.09.2022
(73) Patentinhaber: VITA-ZAHNFABRIK H. Rauter GmbH & Co. KG, 79713 Bad Säckingen (DE)
(72) Erfinder: KOLB, Eva, 79713 Bad Säckingen (DE); AECHTNER, Stefan, 79713 Bad Säckingen (DE); HANSEN, Gerrit, 79713 Bad Säckingen (DE)
(74) Vertreter: dompatent
(86) Internationale Anmeldenummer: PCT/EP2020/079498
(87) Internationale Veröffentlichungsnummer: WO 2021/083741

(56) Entgegenhaltungen:
- EP-A1- 3 130 312
- DE-B3- 102014 118 231
- FR-A- 855 403
- US-A1- 2017 258 556

## Beschreibung

Die Erfindung betrifft ein künstliches Zahnelement sowie eine Prothese mit einer Prothesenbasis und künstlichen Zahnelementen. Bei Zahnelementen handelt es sich insbesondere um einzelne künstliche Zähne oder auch um Einheiten bzw. Blöcke aus mehreren künstlichen Zähnen.

Bei bekannten konfektionierten künstlichen Zähnen ist es erforderlich, dass diese auf der basalen Seite vom Zahntechniker gekürzt werden und die Oberfläche angeraut wird. Das Kürzen ist erforderlich, um den basalen Innenteil des Zahnelements, d.h. denjenigen Teil des Zahnelements, der in die Prothesenbasis eingesetzt ist und in eingesetztem Zustand nicht sichtbar ist, an die in der Prothesenbasis vorgesehene Kavität anzupassen. Das Aufrauen ist erforderlich, um eine ausreichende Festigkeit und Stabilität nach dem Befestigen, insbesondere Einsetzen und Einkleben des Zahnelements in die Prothesenbasis, zu erzielen. Das Kürzen und Aufrauen des Innenteils des Zahnelements durch einen Zahntechniker hat den Nachteil, dass die Genauigkeit stets von den handwerklichen Fähigkeiten des Zahntechnikers abhängig ist und somit ggf. in der Qualität stark schwankende Ergebnisse erzielt werden. Ferner ist ein derartiges Ablängen und Aufrauen des künstlichen Zahnelements durch den Zahntechniker mit erheblichen Kosten verbunden.

Ein künstliches Zahnelement mit den Merkmalen des Oberbegriffs des Anspruchs 1 ist aus EP 3 130 312 oder DE 10 2014 118231 B3 bekannt.

Aufgabe der Erfindung ist es, ein künstliches Zahnelement zu schaffen, bei dem ein Bearbeiten des Innenteils durch einen Zahntechniker nicht oder nur in geringem Umfang erforderlich ist.

Die Lösung der Aufgabe erfolgt durch ein künstliches Zahnelement gemäß Anspruch 1.

Das erfindungsgemäße künstliche Zahnelement weist einen Außenteil und einen Innenteil auf. Bei dem Außenteil handelt es sich um denjenigen Teil des Zahnelements, der in eingesetztem Zustand, d.h. wenn das Zahnelement in eine Kavität einer Prothesenbasis eingesetzt ist, sichtbar ist. Entsprechend ist der Innenteil des Zahnelements derjenige Teil, der in eingesetztem Zustand nicht sichtbar ist. Unabhängig von dem eingesetzten Zustand ist das Außenteil und das Innenteil auch durch die virtuelle Gingivalinie definiert. Der bezogen auf die virtuelle Gingivalinie basale Teil des Zahnelements ist das Innenteil, und der bezogen auf die virtuelle Gingivalinie inzisale/okklusale Teil ist das Außenteil des Zahnelements. Die virtuelle Gingivalinie, die vorzugsweise die Trennlinie zwischen Innenteil und Außenteil darstellt, ist vorzugsweise vollständig umlaufend.

Erfindungsgemäß weist der Innenteil des künstlichen Zahnelements an seiner Oberfläche zumindest teilweise, insbesondere vollständig, eine definierte Oberflächenrauheit auf. Die Rauheit der Oberfläche wird somit vom Hersteller erzeugt. Das künstliche Zahnelement weist somit eine definierte Rauheit ab Werk auf. Insofern ist ein Nachbearbeiten der Oberfläche des Innenteils durch einen Zahntechniker im Allgemeinen nicht mehr erforderlich. Vielmehr kann ein derartiges erfindungsgemäßes künstliches Zahnelement unmittelbar verwendet, d.h. unmittelbar in die entsprechende Kavität der Prothesenbasis befestigt, d.h. insbesondere eingesetzt und eingeklebt werden.

Die virtuelle Gingivalinie variiert bei Patienten insbesondere in Abhängigkeit des Alters des Patienten. Insofern ist die virtuelle Gingivalinie gut geeignet, um den erfindungsgemäß relevanten Innenteil und Außenteil des Zahnelements zu definieren. Bevorzugt ist es hierbei, dass das künstliche Zahnelement in einem Bereich aufgeraut wird bzw. eine definierte Oberflächenrauheit aufweist, die sich geringfügig über die virtuelle Gingivalinie hinweg in Richtung des Außenteils erstreckt. Hierdurch ist sichergestellt, dass die für das Befestigen, d.h. insbesondere Einsetzen und Einkleben des künstlichen Zahnelements in die Kavität relevante Fläche die erforderliche Rauheit aufweist. Die Tatsache, dass sodann ein geringer Bereich des sichtbaren Außenteils ebenfalls aufgeraut ist, ist nicht von besonderer Bedeutung, da das künstliche Zahnelement nach dem Befestigen ohnehin noch bearbeitet, insbesondere poliert werden muss. Dies ist beispielsweise erforderlich, um Klebstoffrückstände zu entfernen. Insofern ist es vorteilhaft, dass die definierte Oberflächenrauheit auf einer geringfügig größeren Oberfläche als dem Innenteil vorgesehen ist, um einen sicheren Verbund zu gewährleisten.

Die die definierte Oberflächenrauheit aufweisende Fläche weist vorzugsweise zumindest die Größe der Verbundfläche auf und ist vorzugsweise etwas größer. Vorzugsweise ragt die Verbundfläche über die virtuelle Gingivalinie in den Außenteil geringfügig vor. Hierbei kann ein Überstand von 0,5 bis 1 mm bestehen. Bei einer erfindungsgemäßen Ausgestaltung des künstlichen Zahnelements weist die Oberflächenrauheit einen arithmetischen Mittenrauwert Rₐ von 1 bis 4 µm, und bevorzugt 2 bis 3 µm.

Die Mittenrauheit Rₐ wird ermittelt durch:
Methode: Profilbasiertes Tastschnittverfahren
Messgerät: HOMMEL-ETAMIC TURBO WAVE V7.62
Messtaster: TKU100
Messstrecke 7,5 µm
Messgeschwindigkeit vt: 0,15 mm/s

Die Rautiefe R_{z} liegt vorzugsweise im Bereich von 5 bis 25 µm, insbesondere 5 bis 20 µm.

Die untere Grenze des arithmetischen Mittenrauwerts Rₐ liegt bei mindestens 1 µm.

Die obere Grenze ist ≦4 µm, und bevorzugt ≦3 µm.

Das sichtbare Außenteil ist vorzugsweise glatter als das Innenteil des erfindungsgemäßen künstlichen Zahnelements. Vorzugsweise ist der arithmetische Mittenrauwert Rₐ des Innenteils größer als der arithmetische Mittenrauwert Rₐ des Außenteils. Insbesondere ist dieser Wert 30% höher und besonders bevorzugt 50% höher, so dass das Innenteil deutlich rauer als das Außenteil ist.

In einer bevorzugten Weiterbildung des erfindungsgemäßen künstlichen Zahnelements weist das Innenteil einen minimalen Außenradius von mindestens 0,6 mm auf. Der im Bereich des Innenteils vorhandene kleinste Radius beträgt somit 0,6 mm oder mehr. Dies ist insbesondere für die Herstellung der Kavität in einer Prothesenbasis vorteilhaft. Besonders bevorzugt ist es, dass der minimale Außenradius mindestens 1,0 mm und insbesondere mindestens 1,25 mm beträgt.

Des Weiteren ist es bevorzugt, dass das Innenteil des künstlichen Zahnelements unsymmetrisch ausgebildet ist. Insbesondere ist das Innenteil nicht rotationssymmetrisch ausgebildet. Hierdurch ist ein Fehleinsetzen in der Prothesenbasis vermieden.

Ferner ist zur Herstellung einer Prothese eine Prothesenbasis vorgesehen. Die Prothesenbasis weist mehrere Kavitäten zur Aufnahme jeweils eines künstlichen Zahnelements, wie vorstehend beschrieben und vorteilhaft weitergebildet, auf. Vorzugsweise weist die Innenfläche der Kavitäten eine zumindest teilweise definierte Oberflächenrauheit auf. Insbesondere weist die entsprechende Innenfläche eine derartige Größe auf, dass sie zumindest die Verbundfläche ausbildet und somit im Bereich der Verbundfläche eine definierte Oberflächenrauheit gegeben ist. Vorzugsweise weist die gesamte Innenfläche eine definierte Oberflächenrauheit auf. Bevorzugt ist es, dass die Oberflächenrauheit der Innenseite der Kavitäten einen arithmetischen Mittenrauwert Rₐ von >0 bis 30 µm aufweist. Besonders bevorzugt ist ein arithmetischer Mittenrauwert Rₐ von >0 bis 10 µm, vorzugsweise 0,5 bis 5 µm, besonders bevorzugt 1 bis 4 µm und weiter besonders bevorzugt 2 bis 3 µm.

Der arithmetische Mittenrauwert Rₐ der Innenseite der Kavität kann vorzugsweise Werte aufweisen wie vorstehend anhand der Oberfläche des Innenteils des künstlichen Zahnelements beschrieben.

Insbesondere zur weiteren Verbesserung der Klebeverbindung zwischen dem künstlichen Zahnelement und der Prothese ist es bevorzugt, dass der arithmetische Mittenrauwert der Oberseite der Kavität ± 50% des arithmetischen Mittenrauwerts der Oberfläche des Innenteils des künstlichen Zahnelements beträgt.

Die einzelnen Kavitäten sind hierbei, bezogen auf eine Einsetzrichtung des entsprechenden künstlichen Zahnelements in die Prothesenbasis, vorzugsweise derart ausgebildet, dass die Kavitäten frei von Hinterschnitten sind. Hierdurch ist eine einfache Anordnung der künstlichen Zahnelemente in der entsprechenden Prothesenbasis möglich.

Vorzugsweise sind die einzelnen Kavitäten der Prothesenbasis komplementär zu dem jeweiligen Innenteil des entsprechend einzusetzenden künstlichen Zahnelements ausgebildet. Hierdurch entsteht ein Spalt konstanter Breite zwischen der jeweiligen Kavität und dem Innenteil des zugehörigen Zahnelements. Hierdurch ist ein sicheres Befestigen des künstlichen Zahnelements in der Prothesenbasis gewährleistet. Ferner ist die Übereinstimmung der realen Prothese mit der geplanten virtuellen Prothese damit sehr hoch, so dass der Endanwender allenfalls wenig nacharbeiten muss. Besonders die Okklusionsebene und -funktion entsprechen sehr genau der Planung und müssen allenfalls nur noch wenig nachgearbeitet werden.

In einer besonders bevorzugten Weiterbildung der Prothesenbasis hat die Kavität einen minimalen Innenradius, der gleich oder größer dem minimalen Außenradius des Innenteils des künstlichen Zahnelements ist. Hat das Innenteil des künstlichen Zahnelements beispielsweise einen Außenradius von minimal 0,6 mm oder mehr, so weist die Kavität ausschließlich Radien auf, die zumindest 0,6 mm oder größer sind. Dies hat den Vorteil, dass bei der Herstellung der Kavitäten Werkzeuge, wie ein Fräsewerkzeug, verwendet werden können, deren Fräskopf oder dergleichen einen entsprechenden Bearbeitungsradius aufweist. Bei einem Radius von mindestens 0,6 mm kann somit ein Fräskopf mit einem Durchmesser von 1,2 mm verwendet werden. Für die Herstellung kleinerer Radien müsste ein kleinerer Fräskopf verwendet werden. Das Verwenden kleiner Fräsköpfe oder entsprechender Werkzeuge führt zu längeren Herstellzeiten der Kavität sowie auch zu geringeren Standzeiten des Werkzeugs. Es ist daher weiter bevorzugt, dass der minimale Innenradius der Kavität insbesondere gleich oder größer 1,0 mm und besonders bevorzugt gleich oder größer 1,25 mm ist.

Insbesondere bei der Verwendung von unsymmetrischen, insbesondere nicht rotationssymmetrisch ausgebildeten künstlichen Zahnelementen sind auch die Kavitäten entsprechend unsymmetrisch und insbesondere nicht rotationssymmetrisch in bevorzugter Ausführungsform ausgebildet. Dies hat den wesentlichen Vorteil, dass eine eindeutige Zuordnung zwischen dem jeweiligen künstlichen Zahnelement und der entsprechenden Kavität sowie auch eine eindeutige Lagedefinition des entsprechenden Zahnelements in der Kavität klar und eindeutig definiert sind.

Es ist daher besonders bevorzugt, dass alle Kavitäten eine unterschiedliche Form aufweisen, so dass eine eindeutige Zuordnung zwischen dem künstlichen Zahnelement und der Kavität besteht. Ein Fehleinsetzen ist somit ausgeschlossen.

Des Weiteren ist es bevorzugt, dass die Kavitäten derart ausgebildet sind, insbesondere eine derartige Tiefe aufweisen, dass ein eingesetztes künstliches Zahnelement eine definierte Zahnhöhe hat.

Des Weiteren ist es insbesondere auch aus ästhetischen Gründen besonders bevorzugt, dass die virtuelle Gingivalinie des künstlichen Zahnelements zumindest teilweise insbesondere vollständig mit der Kavitätenkante im eingesetzten Zustand zusammenfällt bzw. sich die beiden Kanten insbesondere vollständig überdecken.

Ein besonders geeignetes Verfahren zur Herstellung einer Prothesenbasis sowie künstlicher Zahnelemente ist in WO 2018/036853 beschrieben.

Nachfolgend wird die Erfindung anhand einer bevorzugten Ausführungsform unter Bezugnahme auf die anliegenden Zeichnungen näher erläutert.

Es zeigen:
- Fig. 1: eine schematische perspektivische Seitenansicht eines erfindungsgemäßen künstlichen Zahnelements,
- Fig. 2: eine schematische perspektivische Rückansicht eines erfindungsgemäßen künstlichen Zahnelements,
- Fig. 3: eine schematische Draufsicht einer Kavität in einer Prothesenbasis,
- Fig. 4: eine schematische Schnittansicht eines in die Kavitätenbasis eingesetzten Zahnelements und
- Fig. 5: eine perspektivische Ansicht einer Prothesenbasis mit teilweise eingesetzten künstlichen Zahnelementen.

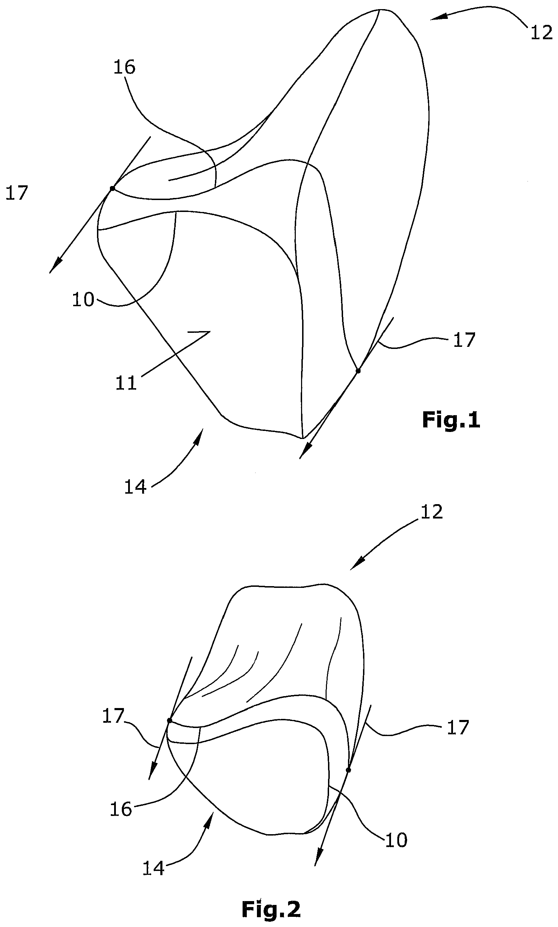

An dem in den Figuren 1 und 2 dargestellten Beispiel eines Zahnelements, bei dem es sich um einen Schneidezahn handelt, ist die virtuelle Gingivalinie 10 dargestellt. Das als Beispiel dargestellte künstliche Zahnelement weist ein Außenteil 12 und ein Innenteil 14 auf. Das Außenteil 12 ist von dem Innenteil 14 durch die virtuelle Gingivalinie 10 getrennt. Wenn das künstliche Zahnelement in die Prothesenbasis eingesetzt ist, ist das Außenteil 12 außerhalb der Prothesenbasis angeordnet bzw. sichtbar. Das Innenteil 14 ist in eingesetztem Zustand innerhalb der Prothesenbasis angeordnet und insofern nicht sichtbar. Eine durch den Innenteil 14 definierte Oberfläche 11, die sich bis zur virtuellen Gingivaline 10 erstreckt, weist die erfindungsgemäße definierte Oberflächenrauheit auf.

Die virtuelle Gingivalinie liegt in dem hinterschnittfreien Bereich. Der hinterschnittfreie Bereich ist definiert durch eine Linie 16. Die Linie 16 definiert hierbei die Grenze des hinterschnittfreien Bereichs in Einsetz- bzw. Einschubrichtung. In Figur 1 unterhalb der Linie 16 erfolgt, bezogen auf die Einschubrichtung (Pfeile 17) in die Prothesenbasis, kein Hinterschnitt mehr. Oberhalb der Linie 16 erfolgt ein Hinterschnitt.

Die Linie 16, die bezogen auf die virtuelle Gingivalinie 10 innerhalb des Außenteils 12 angeordnet ist bzw. einen Abstand zur virtuellen Gingivalinie 10 aufweist, kann ferner eine Grenze der Oberfläche 11 mit definierter Rauheit bestimmen. Die Oberfläche 11 mit definierter Rauheit umfasst somit in bevorzugter Weiterbildung nicht nur die Oberfläche im Bereich des Innenteils 14, sondern erstreckt sich in das Außenteil in Richtung oder bis zu der Linie 16.

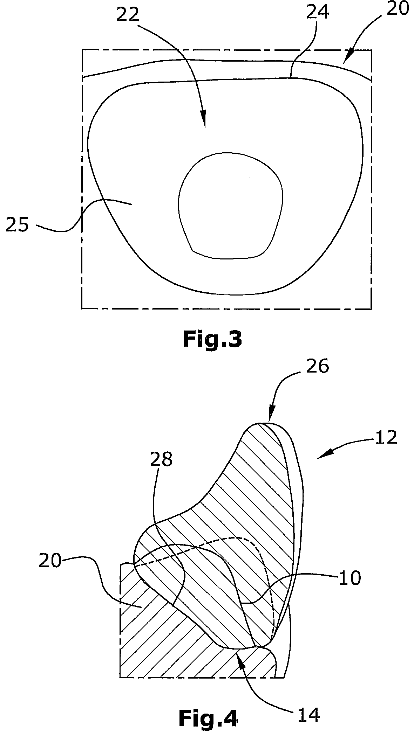

Eine Prothesenbasis 20 (Fig. 3) weist eine Kavität 22 auf. Diese ist durch eine Kavitätenkante 24 begrenzt. Eine Innenfläche 25 der Kavität 22 erstreckt sich vorzugsweise bis zur Kavitätenkante 24. Die Innenfläche 25 weist eine definierte Oberflächenrauheit auf.

Da es besonders bevorzugt ist, dass das Innenteil 14 des Zahnelements in eine Einsteckrichtung 26 (Fig. 4) der Zahnelemente in die Kavitäten 22 keine Hinterschneidungen aufweist, ist eine einfache Montage bzw. ein einfaches Befestigen, d.h. insbesondere Einsetzen und Einkleben in die Kavitäten 22 möglich. Die Kavitäten 22 weisen hierbei in die entsprechende Einsteckrichtung 26 ebenfalls keine Hinterschneidung auf. Die Einsteckrichtung 26 verläuft im Wesentlichen senkrecht zur Prothesenbasis. Bei in der Mundhöhle des Patienten angeordneter Prothese würde die Einstreckrichtung im Wesentlichen vertikal verlaufen.

Die Kavität 22 ist zu dem Innenteil komplementär ausgebildet, so dass eine exakte Lagedefinition des Zahnelements in der Kavität 22 gegeben ist. Durch eine komplementäre Ausgestaltung des Innenteils 14 und der Kavität 22 kann ferner - falls erforderlich - ein Klebespalt 28 (Fig. 4) realisiert werden, der über seine gesamte Fläche eine konstante Breite aufweist. Insofern ist auch das Volumen des Klebespalts und somit die erforderliche Klebstoffmenge exakt bekannt.

In Fig. 4, in der das Zahnelement und auch die Prothesenbasis 20 geschnitten dargestellt sind, ist zusätzlich die virtuelle Gingivalinie 10 dargestellt. Hierbei verläuft der als durchgezogene Linie dargestellte Teil der virtuellen Gingivalinie 10 bezogen auf die Schnittfläche des Zahnelements vor der Zeichenebene und der gestrichelt dargestellte Teil hinter der Zeichenebene.

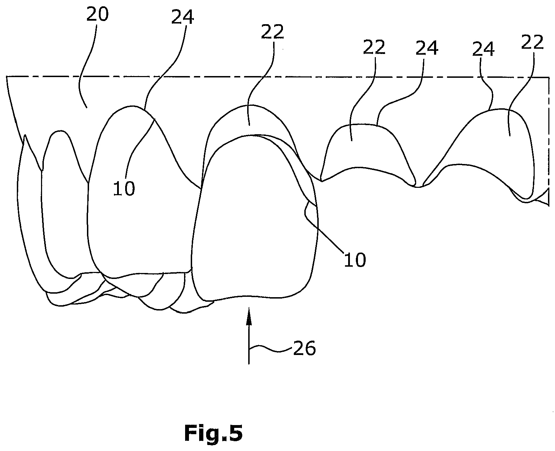

Zur vollständigen Herstellung einer Prothese sind in der Prothesenbasis 20 mehrere Kavitäten 22 vorgesehen (Fig. 5). In die einzelnen Kavitäten wird beispielsweise zunächst eine definierte Menge Klebstoff eingebracht und sodann werden die entsprechenden Zahnelemente in Einsteckrichtung 26 in die Kavitäten 22 eingesetzt. Bei eingesetzten Zahnelementen liegen die Kavitätenkante 24 und die virtuelle Gingivalinie 10 vorzugsweise übereinander. Aufgrund der definierten Oberflächenrauheit der Oberfläche 11 des Innenteils 14 des Zahnelements 12 sowie aufgrund der definierten Rauheit der Oberfläche 25 der Kavität 22 kann eine stabile und sehr feste Verbindung hergestellt werden.

## Patentansprüche

1. Künstliches Zahnelement zum unmittelbaren Einsetzen in eine Kavität (22) einer Prothesenbasis (20), mit
einem in eingesetztem Zustand sichtbaren Außenteil (12) und
einem in eingesetztem Zustand nicht sichtbaren Innenteil (14),
wobei
das Innenteil (14) zumindest teilweise eine definierte Oberflächenrauheit aufweist **dadurch gekennzeichnet, dass** die Oberflächenrauheit einen arithmetischen Mittenrauwert Rₐ von 1 bis 4 µm aufweist.

2. Künstliches Zahnelement nach Anspruch 1, **dadurch gekennzeichnet, dass** das Innenteil (14) im Bereich einer Klebefläche (11) eine definierte Oberflächenrauheit aufweist.

3. Künstliches Zahnelement nach Anspruch 1 oder 2, **dadurch gekennzeichnet, dass** das Innenteil (14) an der gesamten Oberfläche (11) eine definierte Oberflächenrauheit aufweist.

4. Künstliches Zahnelement nach einem der Ansprüche 1-3, **dadurch gekennzeichnet, dass** die Oberflächenrauheit einen arithmetischen Mittenrauwert Rₐ von 2 bis 3 µm aufweist.

5. Prothese mit einer Prothesenbasis mit mehreren Kavitäten, in denen jeweils ein künstliches Zahnelement nach einem der Ansprüche 1-4 eingesetzt ist.

6. Prothese nach Anspruch 5, **dadurch gekennzeichnet, dass** die Kavitäten (22) eine Innenfläche (25) aufweisen, die zumindest teilweise eine definierte Oberflächenrauheit aufweist.

7. Prothese nach Anspruch 6, **dadurch gekennzeichnet, dass** die Innenfläche (25) im Bereich einer Verbundfläche eine definierte Oberflächenrauheit aufweist.

8. Prothese nach Anspruch 6 oder 7, **dadurch gekennzeichnet, dass** die gesamte Innenfläche (25) eine definierte Oberflächenrauheit aufweist.

9. Prothese nach einem der Ansprüche 5-8, **dadurch gekennzeichnet, dass** die Oberflächenrauheit der Innenseite einen arithmetischen Mittenrauwert Rₐ von >0 bis 30 µm, vorzugsweise >0 bis 10 µm, bevorzugt 0,5 bis 5 µm, besonders bevorzugt 1 bis 4 µm und weiter besonders bevorzugt 2 bis 3 µm aufweist.

10. Prothese nach einem der Ansprüche 5-9, **dadurch gekennzeichnet, dass** die Kavitäten (22) bezogen auf eine Einsetzrichtung (26), in der das Zahnelement in die Prothesenbasis (20) eingesetzt wird, frei von Hinterschnitten sind.

11. Prothese nach einem der Ansprüche 5-10, **dadurch gekennzeichnet, dass** die Kavitäten (22) komplementär zu den Innenteilen (14) des entsprechenden einzusetzenden künstlichen Zahnelements ausgebildet sind, so dass ein Spalt insbesondere konstanter Breite zwischen den Kavitäten (22) und dem Innenteil des zugehörigen Zahnelements ausgebildet ist.

12. Prothese nach einem der Ansprüche 5-11, **dadurch gekennzeichnet, dass** die Kavitäten (22) unsymmetrisch, insbesondere nicht rotationssymmetrisch ausgebildet sind und/oder alle Kavitäten (22) eine unterschiedliche Form aufweisen, so dass eine eindeutige Zuordnung zwischen dem künstlichen Zahnelement und der Kavität (22) besteht.

13. Prothese nach einem der Ansprüche 5-12, **dadurch gekennzeichnet, dass** die Kavitäten (22) derart ausgebildet sind, dass ein eingesetztes künstliches Zahnelement eine definierte Zahnhöhe hat.

14. Prothese nach einem der Ansprüche 5-13, **dadurch gekennzeichnet, dass** die Kavitäten (22) einen minimalen Innenradius aufweisen, der gleich oder größer dem minimalen Außenradius des Innenteils (14) des in die Kavität einzusetzenden künstlichen Zahnelements ist.

## Claims

1. An artificial tooth element for direct insertion into a cavity (22) of a prosthesis base (20), comprising
an outer part (12) visible in the inserted state, and
an inner part (14) not visible in the inserted state,
wherein the inner part (14) comprises a defined surface roughness at least in part,
**characterized in that** the surface roughness has an arithmetic average roughness value Rₐ of 1 to 4 µm.

2. The artificial tooth element according to claim 1, **characterized in that** the inner part (14) has a defined surface roughness in the region of a bonding surface (11).

3. The artificial tooth element according to claim 1 or 2, **characterized in that** the inner part (14) has a defined surface roughness across the entire surface (11).

4. The artificial tooth element according to any one of claims 1-3, **characterized in that** the surface roughness has an arithmetic average roughness value Rₐ of 2 to 3 µm.

5. A prosthesis with a prosthesis base having a plurality of cavities in each of which an artificial tooth element according to any one of claims 1-4 is inserted.

6. The prosthesis according to claim 5, **characterized in that** the cavities (22) have an inner surface (25) which at least in part has a defined surface roughness.

7. The prosthesis according to claim 6, **characterized in that** the inner surface (25) has a defined surface roughness in the region of a bonding surface.

8. The prosthesis according to claim 6 or 7, **characterized in that** the entire inner surface (25) has a defined surface roughness.

9. The prosthesis according to any one of claims 5-8, **characterized in that** the surface roughness of the inner side has an arithmetic average roughness value Rₐ of >0 to 30 µm, preferably >0 to 10 µm, more preferred 0.5 to 5 µm, particularly preferred 1 to 4 µm, and most preferred 2 to 3 µm.

10. The prosthesis according to any one of claims 5-9, **characterized in that** the cavities (22) are free from undercuts with respect to a direction of insertion (26) in which the tooth element is inserted into the prosthesis base (20).

11. The prosthesis according to any one of claims 5-10, **characterized in that** the cavities (22) are formed complementarily to the inner parts (14) of the respective artificial tooth element so that a gap of in particular constant width is formed between the cavities (22) and the inner part of the associated tooth elements.

12. The prosthesis according to any one of claims 5-11, **characterized in that** the cavities (22) are formed asymmetrically, in particular not rotationally symmetrically, and/or all cavities (22) have different shapes so that an unambiguous association between the artificial tooth element and the cavity (22) exists.

13. The prosthesis according to any one of claims 5-12, **characterized in that** the cavities (22) are formed such that an inserted artificial tooth element has a defined tooth height.

14. The prosthesis according to any one of claims 5-13, **characterized in that** the cavities (22) have a minimum inner radius that is equal to or greater than the minimum outer radius of the inner part (14) of the artificial tooth element to be inserted into the cavity.

## Revendications

1. Élément dentaire artificiel à insérer directement dans une cavité (22) d'une base de prothèse (20), avec une partie extérieure (12) visible à l'état inséré et une partie intérieure (14) non visible à l'état inséré, dans lequel la partie intérieure (14) présente au moins en partie une rugosité de surface définie, **caractérisé en ce que** la rugosité de surface présente une rugosité moyenne arithmétique Rₐ de 1 à 4 µm.

2. Élément dentaire artificiel selon la revendication 1, **caractérisé en ce que** la partie intérieure (14) présente une rugosité de surface définie dans la zone d'une surface de collage (11).

3. Élément dentaire artificiel selon la revendication 1 ou 2, **caractérisé en ce que** la partie intérieure (14) présente une rugosité de surface définie sur toute la surface (11).

4. Élément dentaire artificiel selon l'une quelconque des revendications 1 à 3, **caractérisé en ce que** la rugosité de surface présente une rugosité moyenne arithmétique Rₐ de 2 à 3 µm.

5. Prothèse avec une base de prothèse avec plusieurs cavités, dans lesquelles est respectivement inséré un élément dentaire artificiel selon l'une quelconque des revendications 1 à 4.

6. Prothèse selon la revendication 5, **caractérisée en ce que** les cavités (22) présentent une surface intérieure (25) qui présente au moins partiellement une rugosité de surface définie.

7. Prothèse selon la revendication 6, **caractérisée en ce que** la surface intérieure (25) présente une rugosité de surface définie dans la zone d'une surface de liaison.

8. Prothèse selon la revendication 6 ou 7, **caractérisée en ce que** toute la surface intérieure (25) présente une rugosité de surface définie.

9. Prothèse selon l'une quelconque des revendications 5 à 8, **caractérisée en ce que** la rugosité de surface de la face intérieure présente une rugosité moyenne arithmétique Rₐ de > 0 à 30 µm, de préférence > 0 à 10 µm, de manière préférée 0,5 à 5 µm, de manière particulièrement préférée 1 à 4 µm et mieux encore 2 à 3 µm.

10. Prothèse selon l'une quelconque des revendications 5 à 9, **caractérisée en ce que** les cavités (22) sont dépourvues de dégagements par rapport à une direction d'insertion (26) dans laquelle l'élément dentaire est inséré dans la base de prothèse (20).

11. Prothèse selon l'une quelconque des revendications 5 à 10, **caractérisée en ce que** les cavités (22) sont réalisées de manière complémentaire aux parties intérieures (14) de l'élément dentaire artificiel correspondant à insérer, de sorte qu'une fente de largeur notamment constante est réalisée entre les cavités (22) et la partie intérieure de l'élément dentaire associé.

12. Prothèse selon l'une quelconque des revendications 5 à 11, **caractérisée en ce que** les cavités (22) sont réalisées de manière asymétrique, en particulier non à symétrie de rotation et/ou que toutes les cavités (22) présentent une forme différente, de sorte qu'il existe une association claire entre l'élément dentaire artificiel et la cavité (22).

13. Prothèse selon l'une quelconque des revendications 5 à 12, **caractérisée en ce que** les cavités (22) sont réalisées de telle sorte qu'un élément dentaire artificiel inséré ait une hauteur de dent définie.

14. Prothèse selon l'une quelconque des revendications 5 à 13, **caractérisée en ce que** les cavités (22) présentent un rayon intérieur minimal qui est égal ou supérieur au rayon extérieur minimal de la partie intérieure (14) de l'élément dentaire artificiel à insérer dans la cavité.
